# EUROPEAN PATENT SPECIFICATION

(11) **EP 3 061 597 B1**
(45) Date of publication and mention of the grant of the patent: **22.09.2021**
(21) Application number: 13895868.1
(22) Date of filing: 04.12.2013
(51) Int. Cl.: B29C 73/16, B65D 47/06, B29L 30/00

(54) **TYRE REPAIR MACHINE**
MASCHINE ZUR REPARATUR VON LUFTREIFEN
MACHINE DE RÉPARATION DE PNEU

(30) Priority: 23.10.2013 WO PCT/CN2013/085808
(43) Date of publication of application: 31.08.2016
(73) Proprietor: Top Alliance Technology Limited, Tortola (VG); Hong, Ying Chi, Causeway Bay, Hong Kong (CN)
(72) Inventor: HONG, Ying Chi, Causeway Bay Hong Kong (CN)
(74) Representative: Epping - Hermann - Fischer
(86) International application number: PCT/CN2013/088534
(87) International publication number: WO 2015/058438

(56) References cited:
- WO-A1-2013/120261
- AU-A4- 2012 101 427
- CN-A- 103 009 644
- DE-A1-102012 108 822
- DE-U1-202006 001 994
- US-A1- 2013 068 346

## Description

### TECHNICAL FIELD

This invention relates to a tyre repair tool, in particular a tyre repair machine.

### BACKGROUND ART

Tyre repair machines for use in various vehicular tyres that are currently sold on the market generally can provide the preventive functions of automatic tyre repair and leakage prevention. But the existing tyre repair machines generally adopt a spray-type tyre repair agent, wherein the nozzle of the spray can of the tyre repair agent is mounted onto the air nozzle of the tyre, and is then pressed to inject the tyre repair agent into the tyre; during operation, it is required to use fingers to press to operate; and in the event of insufficient pressing forces, that will cause insufficient tyre repair agent in the tyre, thus failing to achieve the effect of tyre repair. Besides, the spray can cannot be used in an upside down fashion; and when the air nozzle position is opposite to the upright direction of the spray can, it is impossible to accomplish the tyre repair.

The prior art US2013/068346A1 disclosed a tire repair device comprises: a bottle body containing tire cement, and a bottle cap formed at an opening of the bottle body. A tire cement guiding tube is provided in the bottle cap, in which the guiding tube includes a first tube section axially parallel to the bottle body and a second tube section perpendicular to the first section of the tube. The second tube section connects with an end of a fluid transfer tube, and a connector is formed at the other end of the fluid transfer tube, and the connector is connected to a tire to deliver tire cement from the bottle body to damaged areas of the tire. A step is formed along the inside wall between an entrance of the first tube section and an entrance of the second tube section. A rubber plug is provided between the step and the entrance of the first tube section; and the connecting point of the second tube section and the first tube section 21 is located between the step and the end of the first tube section.

Another tire repair device is disclosed in DE202006001994U1.

### CONTENTS OF INVENTION

The technical problem that this invention aims to solve is: to, directing against the problem of inconvenience in operating existing tyre repair machines, provide a tyre repair machine that has a simple structure and is convenient for operation.

The technical solution adopted by this invention for solving the technical problem thereof is:
This invention according to claim 1 discloses a tyre repair machine, comprising
a bottle body holding glue, wherein a bottle cap provided at an opening of the bottle body seals the bottle body, and a glue guiding tube provided in the bottle cap; the glue guiding tube comprises a first tube section extending into the bottle body, and a second tube section;
one end of the first tube section is provided with a first inlet that enables the glue in the bottle body to enter the first tube section, and the other end of the first tube section forms a closed first tail end; one end of the second tube section is provided with a second inlet that enables the glue in the first tube section to enter the second tube section, and the other end of the second tube section forms a second tail end; the second tail end of the second tube section is in communication with one end of a pipe; the other end of the pipe is provided with a connector for connecting with a damaged tyre so as to direct the glue inside the bottle body into the damaged tyre;
the second inlet is located between the first inlet of the first tube section and the first tail end of the first tube section;
a flange is provided on an inner wall of the first tube section between the first inlet of the first tube section and the second inlet of the second tube section, and a plug capable of sliding in the first tube section is also provided in the first tube section;
and at least one rib is fixed in the first tube section, wherein the rib is located between the flanage and the first tail end.

In the above tyre repair machine according to this invention, the bottle cap is provided with a through hole extending through the bottle cap and the first tail end of the first tube section to communicate with the first tube section; the inner diameter of the through hole is smaller than the inner diameter of the first tube section between the flange and the first tail end.

In the above tyre repair machine according to this invention, the inner diameter of the flange is smaller than the inner diameter of the first tube section between the first inlet and the flange; and the inner diameter between the first inlet and the flange of the first tube section further is smaller than the inner diameter of the first tube section between the flange and the first tail end.

In the above tyre repair machine according to this invention, the joint between the second tube section and the pipe is provided with a first fastening loop; the joint between the pipe and the connector is provided with a second fastening loop.

In the above tyre repair machine according to this invention, the bottle body is further provided with an air orifice for connecting to an air compressor so as to fill the bottle body with compressed air.

In the above tyre repair machine according to this invention, provided between the glue guiding tube and the internal sidewalls of the bottle cap is a sealing gasket for preventing the glue from flowing out.

In the above tyre repair machine according to this invention, formed at the opening of the bottle body is a neck tube; the outer walls of the neck tube are provided with an external thread; the interior of the bottle cap forms a receiving chamber; the sidewalls of the receiving chamber are provided with an internal thread adapted to mate with the external thread; the neck tube of the bottle body is secured in the receiving chamber via the external thread of the neck tube and the internal thread of the receiving chamber.

The first tube section is disposed in the receiving chamber; the sealing gasket is disposed in the receiving chamber, and is located between the neck tube and the top of the bottle cap.

The first tail end of the first tube section extends to the top of the bottle cap; the second tube section is fitted into the top of the bottle cap.

In the above tyre repair machine according to this invention, the connector comprises a tyre mouthend core connected to the pipe,
and further comprises, sleeved on the outer wall of the tyre mouthend core, a sheath for connecting to a tyre valve core; and a sealing ring disposed on the tyre mouthend core end for preventing leakage of air and glue.

In the above tyre repair machine according to this invention, the tyre mouthend core is connected to the pipe via threads; the tyre mouthend core outer wall is provided with an annular boss;
one end of the sheath is engaged on the annular boss, with the other end provided with a thread for connecting to the tyre valve core.

The advantageous effects of this invention lie in: by adopting a bottle cap with a glue guiding tube, and disposing a flange and a plug inside a first tube section of the glue guiding tube, the plug can move within the first tube section along with the pressure inside the bottle cap, so as to block or open the second inlet as required, wherein when the interior of the bottle body is not filled with compressed air, the plug is located between the first inlet and the flange in the first tube section; when the temperature change causes the air inside the bottle body to expand, the plug is engaged at the flange; when the interior of the bottle body is filled with compressed air, the plug is located between the second inlet and the first tail end of the first tube section, so as to facilitate the glue flowing from the bottle body through the pipe to the damaged tyre. In this way, the gas pressure inside the bottle body is changed to realize supply of glue to the damaged tyre. Besides, the tyre repair machine according to this invention has a simple structure, is simple and convenient to operate, saves time and saves power, can be used both upright and upside-down, and is convenient for commercial facilities.

### BRIEF DESCRIPTION OF FIGURES

This invention is further described in conjunction with the following figures and embodiments. In the Figures:
Fig. 1 is a schematic diagram of the structure of a tyre repair machine of a preferred embodiment of this invention;
Fig. 2 is a schematic diagram of the assembling structure of a tyre repair machine of a preferred embodiment of this invention;
Fig. 3 is a sectional view of the entirety of a tyre repair machine of a preferred embodiment of this invention;
Fig. 4 is an enlarged illustration of the portion A in Fig. 3;
Fig. 5 is an enlarged illustration of the portion B in Fig. 3;
Fig. 6 is a schematic diagram of the plug location *a* inside the bottle cap when the tyre repair machine of the preferred embodiment of this invention is at normal temperature and pressure;
Fig. 7 is a schematic diagram of the plug location b inside the bottle cap when the tyre repair machine of the preferred embodiment of this invention is heated and expands;
Fig. 8 is a schematic diagram of the plug location c inside the bottle cap when the tyre repair machine of the preferred embodiment of this invention is filled with compressed air;
Fig. 9 is a sectional view of the bottle body of the tyre repair machine of the preferred embodiment of this invention;
Fig. 10 is a schematic diagram of the plug of the first embodiment of this invention;
Fig. 11 is a schematic diagram of the plug of the second embodiment of this invention;
Fig. 12 is a schematic diagram of the plug of the third embodiment of this invention;
Fig. 13 is a schematic diagram of the plug of the fourth embodiment of this invention;
Fig. 14 is a schematic diagram of the plug of the fifth embodiment of this invention; and
Fig. 15 is a schematic diagram of the plug of the sixth embodiment of this invention.

### PREFERRED EMBODIMENTS

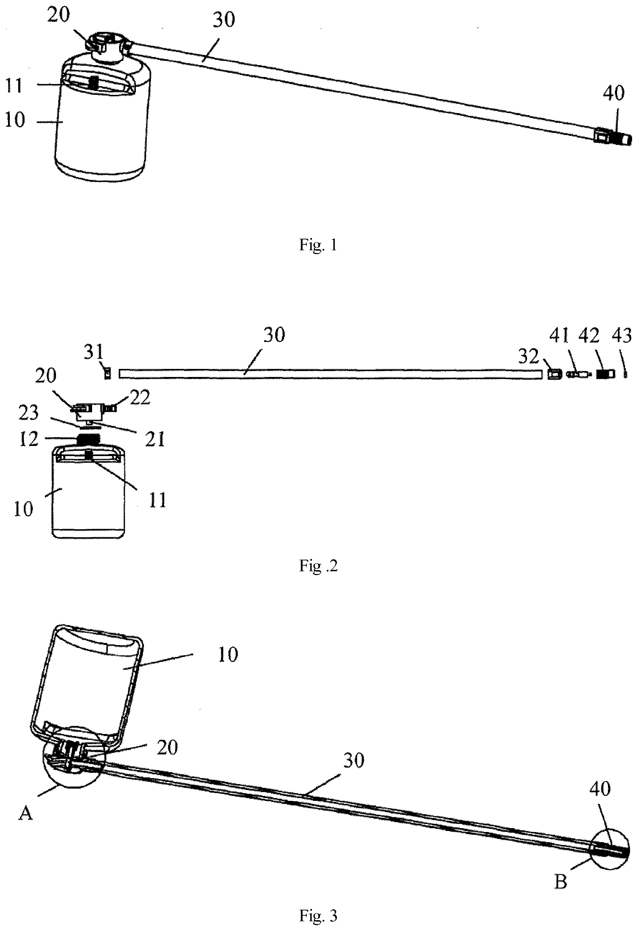

The structure of the tyre repair machine of a preferred embodiment of this invention is as shown in Fig. 1; meanwhile, also refer to Figs. 2, 3, 4, 5, 6, 7, 8 and 9. The tyre repair machine comprises a bottle body 10 holding glue, wherein a bottle cap 20 provided at an opening of the bottle body 10 seals the bottle body 10, and a glue guiding tube provided in the bottle cap 20; the glue guiding tube comprises a first tube section 21 extending into the bottle body 10, and a second tube section 22; preferably, in this embodiment, the second tube section 22 is perpendicular to the first tube section 21.

One end of the first tube section 21 is provided with a first inlet 211 that enables the glue in the bottle body 10 to enter the first tube section 21, and the other end of the first tube section 21 forms a closed first tail end 212; one end of the second tube section 22 is provided with a second inlet 221 that enables the glue in the first tube section 21 to enter the second tube section 22, and the other end of the second tube section 22 forms a second tail end 222; the second tail end 222 of the second tube section 22 is in communication with one end of a pipe 30; the other end of the pipe 30 is provided with a connector 40 for connecting with a damaged tyre so as to direct the glue inside the bottle body 10 into the damaged tyre;the second inlet 221 is located between the first inlet 211 of the first tube section 21 and the first tail end 212 of the first tube section 21;a flange 25 is provided on an inner wall of the first tube section 21 between the first inlet 211 of the first tube section 21 and the second inlet 221 of the second tube section 22, and a plug 24 capable of sliding in the first tube section 21 is also provided in the first tube section 21; the plug 24 is press-fit with the inner walls of the first tube section 21. In this embodiment, the flange 25 has an annular shape.

In this embodiment, the outer diameter of the plug 24 is slightly greater than the minimum inner diameter of the first tube section 21. In this way, when the plug 24 shrinks at a low temperature, the plug 24 will still abut against the inner walls of the first tube section 21. As such, at low temperatures, the glue will still not leak to the outside.

Further, the inner diameter of the flange 25 is smaller than the inner diameter of the first tube section 21 between the first inlet 211 and the flange 25; and the inner diameter between the first inlet 211 and the flange 25 of the first tube section 21 further is smaller than the inner diameter of the first tube section 21 between the flange 25 and the first tail end 212.

In this embodiment, the inner diameter between the first inlet 211 and the flange 25 of the first tube section 21 is 3.5 mm; the inner diameter of the flange 25 is 3.4 mm; and the inner diameter of the first tube section 21 between the flange 25 and the first tail end 212 is 3.8 mm.

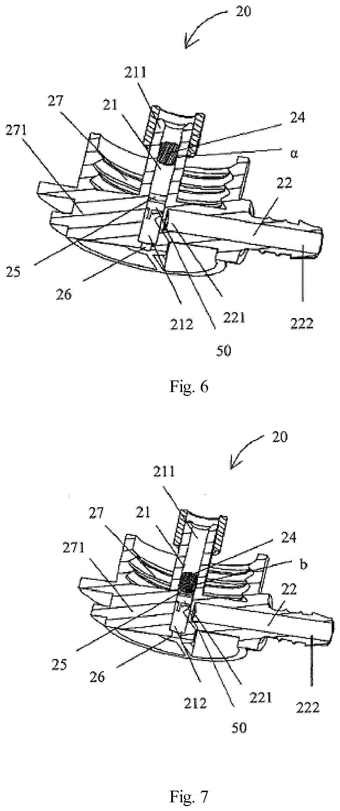

Wherein the plug 24 is movable in the first tube section 21 when acted upon by the gas pressure inside the bottle body 10, so as to block or open the second inlet 221 of the second tube section 22 as required. As shown in Fig. 6, when the interior of the bottle body 10 is not filled with compressed air under normal temperature and pressure, the plug 24 is located between the first inlet 211 and the flange 25 in the first tube section 21, i.e. the location *a*.

As shown in Fig. 2, at high temperatures, the internal gas pressure generated by expansion of the air inside the bottle body 10 causes the plug 24 to move and engage at the flange 25; at this time, the length of the plug 24 is extended and the width thereof is narrowed; when the interior of the bottle body 10 is added with compressed air, the internal pressure of the bottle body 10 increases drastically, and the plug 24 moves to a location between the second inlet 221 of the second tube section 22 and the first tail end 212 of the first tube section 21; meanwhile, the glue in the bottle body 10 passes through the section inlet 221 of the second tube section 22 and flows through the pipe 30 into the damaged tyre, forming a one-way valve operating process. In this way, supply of glue to the damaged tyre can be realized by changing the gas pressure in the bottle body 10, so as to repair to the tyre. Moreover, the entire tyre repair machine in this embodiment has a simple structure, is simple and convenient to operate, and is convenient for commercial facilities.

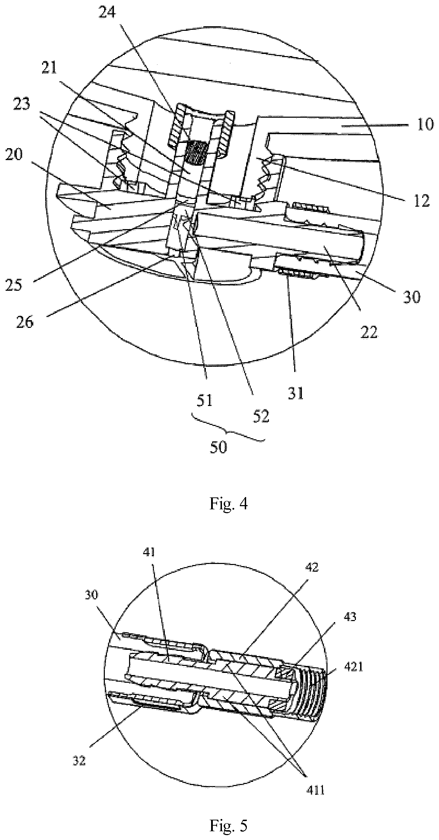

In a further embodiment, as shown in Fig. 4, the bottle camp 20 is provided with a through hole 26 extending through the bottle cap 20 and the first tail end 212 of the first tube section 21 to communicate with the first tube section 21; the inner diameter of the through hole 26 is smaller than the inner diameter of the first tube section 21 between the flange 25 and the first tail end 212. Preferably, in this embodiment, the inner diameter of the through hole 26 is smaller than 100 µm. As such, according to the Young-Laplace equation, under action of the capillary pressure, the glue does not pass through the through hole 26 easily. As the inner diameter of the capillary tube becomes smaller, the connector pressure difference will be sufficiently large to prevent the glue from leakage during use of the tyre repair machine.

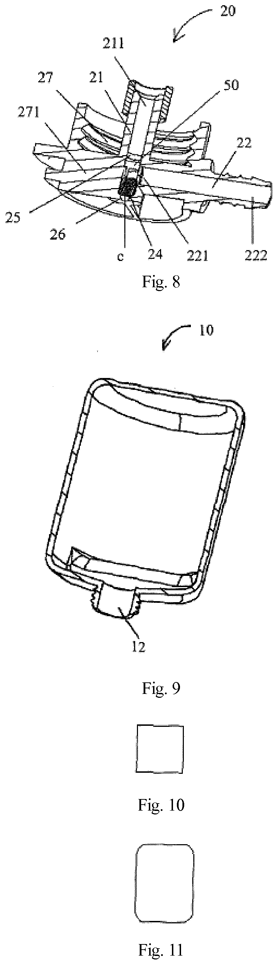

When the plug 24 moves to a location between the second inlet 221 of the second tube section 22 and the first tail end 212 of the first tube section 21 (i.e. the location c as shown in Fig. 8); air between the second inlet 221 of the second tube section 22 and the first tail end 212 of the first tube section 21 will be discharged through the through hole 26; the plug 24 will not block the second inlet 221 of the second tube section 22, thus enabling the second inlet 221 of the second tube section 22 to communicate with the interior of the bottle body 10. In this way, under the atmospheric pressure, the glue will not be able to flow out completely.

It can be understood that the bottle cap 20 can be provided with no through hole 26; and the space between the second inlet 221 and the first tail end 212 of the first tube section 21 has to be sufficiently large, such that when the plug 24 moves to a location between the second inlet 221 and the first tail end 212, the plug 24 will not be subject to large resistance.

Further, in order to avoid the case in which the plug 24, when moving to the first tail end 212, accidentally enters the second tube section 22 or partially blocks the second inlet 221, the first tube section 21 is provided with at least one rib 50 fixed thereon, wherein the rib 50 is located between the flange 25 and the first tail end 212. The rib 50 includes a rib portion 51 abutting on the plug 24, and an abutting portion 52 connected to said rib portion 51 and abutting against the inner walls of the first tube section 21. Preferably, the rib 50 is fixed inside the first tube section 21, and the rib portion 51 is disposed between the bottom of the second tube section 22 and the flange 25. When the plug 24 passes through the rib portion 51 under gas pressure, the rib portion 51 of the rib 50 abuts against the plug 24, so as to prevent the plug 24 from entering the second tube section or partially blocking the second inlet 221.

In an even further embodiment, as shown in Fig. 2, the joint between the second tube section 22 and the pipe 30 is provided with a first fastening loop 31, so as to fasten the second tube section 22 and the pipe 30, and prevent leakage of gas or glue in the tyre repair process; the joint between the pipe 30 and the connector 40 is provided with a second fastening loop 32 which is likewise used for preventing leakage of gas or glue in the tyre repair process, wherein the first fastening loop 31 and the second fastening loop 32 can be an anchor-bolt structure that uses a bolt to adjust the tightness.

Further, as shown in Figs. 1 and 2, the bottle body 10 is further provided with an air orifice 11 for connecting to an air compressor and filling the bottle body 10 with compressed air. Preferably, said air orifice 11 is disposed at a location adjacent to the opening of the bottle body 10, so as to facilitate connection between the bottle body 10 and the air compressor (not shown).

In an even further embodiment, as shown in Figs. 3 and 4, a sealing gasket 23 is disposed between the glue guiding tube and the inner sidewalls of the bottle cap 20. As such, during operation, the sealing gasket 23 can prevent the glue from flowing out from the connection gap between the bottle body 10 and the bottle cap 20.

Specifically, as shown in Figs. 4, 6, 9, formed at the opening of the bottle body 10 is a neck tube 12, whose outer walls are provided with an external thread. Besides, the interior of the bottle cap 20 is formed with a receiving chamber 27; the sidewalls of the receiving chamber 27 are provided with an internal thread adapted to mate with the external thread; the neck tube 12 of the bottle body 10 is secured in the receiving chamber 27 via the external thread of the neck tube 12 and the internal thread of the receiving chamber 27. The first tube section 21 is disposed in the receiving chamber 27; the sealing gasket 23 is disposed in the receiving chamber 27, and is located between the neck tube 12 and the top 271 of the bottle cap 20; and the neck tube 12 tightly presses the sealing gasket 23. The first tail end 212 of the first tube section 21 extends to the top 271 of the bottle cap 20, and is in communication with the through hole 26 located at the top 271 of the bottle cap 20; the second tube section 22 is inserted into the top 271 of the bottle cap 20.

Preferably, as shown in Figs. 6, 7 and 8, the above bottle cap 20 is configured to be integrally molded. During assembly, it is only required to mount the sealing gasket 23 in the receiving chamber 27 of the bottle cap 20, and to screw the bottle cap 20 onto the neck tube 12 of the bottle body 10, and then to lock and connect the pipe 30 to the second tail end 222 of the second tube section 22; and that will do.

In an even further embodiment, as shown in Figs. 2 and 5, the connector 40 comprises a tyre mouthend core 41 connected to the pipe 30; the tyre mouthend core 41 can abut against the tyre valve core, enabling the tyre interior to form a communication system with the pipe 30, the bottle cap 20 and the bottle body 10, hence facilitating injection of glue for tyre repair. The connector 40 further comprises, sleeved on the outer wall of the tyre mouthend core 41, a sheath 42 for connecting to a tyre valve core; and a sealing ring 43 disposed on the tyre mouthend core 41 end for preventing leakage of air and glue.

Specifically, as shown in Fig. 5, the tyre mouthend core 41 is connected to the pipe 30 via threads; the tyre mouthend core 41 outer wall is provided with an annular boss 411. One end of the sheath 42 is engaged on the annular boss 411, with the other end provided with a thread 421 for connecting to the tyre valve core.

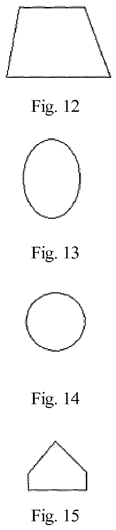

In the above embodiment, the volume of the bottle body 10 preferably is 450 ml, which is adapted to vehicles below midsize sedan. The plug 24 in the first tube section 21 is made of rubber material, which can satisfy expansion of air in the bottle when the ambient temperature is between -40 to 80 °C. It can be understood that the plug 24 can be made from silicon rubber, latex rubber, resins, epoxy resins or other high molecular polymers. As compared with other materials, these materials all possess certain elasticity, and smaller thermal expansion or thermal shrinkage. The plug 24 can have a cube shape, cuboid shape, prismoid shape, ellipsoid shape, sphere shape, cone shape, etc., as shown in Figs. 10-15. Of course, the shape of the plug 24 is not only limited to the above shapes.

When it is required to repair a tyre, the air compressor is connected with the bottle body 10, and the pipe 30 is connected with the tyre to be repaired, respectively. When the air compressor is activated, the compressed air generated by the air compressor pushes the plug 24 inside the bottle body 10 from the location *a* or location *b* to the location c; then, the glue inside the bottle body 10 flows into the tyre; the air compressor continues to generate compressed air, thus enabling the tyre to reach normal gas pressure; then, by advancing the vehicle at a low speed, the glue inside the tyre covers the inner walls of the tyre, for repairing the tyre. The tyre repair machine according to this invention has a simple structure, is simple and convenient to operate, saves time and saves power, can be used both upright and upside-down, and is convenient for commercial facilities.

It should be understood that as far as a person ordinarily skilled in the art is concerned, he can make improvements or modifications according to the above depiction; and all these improvements and modifications should fall into the scope of protection as claimed by the accompanying claims of this invention.

## Claims

1. A tyre repair machine, comprising a bottle body (10) holding glue, wherein a bottle cap (20) provided at an opening of the bottle body (10) seals the bottle body (10), wherein
a glue guiding tube is provided in the bottle cap (20); the glue guiding tube comprises a first tube section (21) extending into the bottle body (10), and a second tube section (22);
one end of the first tube section (21) is provided with a first inlet (211) that enables the glue in the bottle body (10) to enter the first tube section (21), and the other end of the first tube section (21) forms a closed first tail end (212); one end of the second tube section (22) is provided with a second inlet (221) that enables the glue in the first tube section (21) to enter the second tube section (22), and the other end of the second tube section (22) forms a second tail end (222); the second tail end (222) of the second tube section (22) is in communication with one end of a pipe (30); the other end of the pipe (30) is provided with a connector (40) for connecting with a damaged tyre so as to direct the glue inside the bottle body (10) into the damaged tyre;
the second inlet (221) is located between the first inlet (211) of the first tube section (21) and the first tail end (212) of the first tube section (21);
a flange (25) is provided on an inner wall of the first tube section (21) between the first inlet (211) of the first tube section (21) and the second inlet (221) of the second tube section (22), and a plug (24) capable of sliding in the first tube section (21) is also provided in the first tube section (21),
**characterized in that**
at least one rib (50) is fixed in the first tube section (21), wherein the rib is located between the flange (25) and the first tail end (212), wherein the rib 50 includes a rib portion 51 abutting on the plug (24), and an abutting portion (52) connected to said rib portion (51) and abutting against the inner walls of the first tube section (21).

2. The tyre repair machine according to claim 1, **characterized in that** the bottle cap (20) is provided with a through hole (26) extending through the bottle cap (20) and the first tail end (212) of the first tube section (21) to communicate with the first tube section (21); the inner diameter of the through hole (26) is smaller than the inner diameter of the first tube section (21) between the flange (25) and the first tail end (212).

3. The tyre repair machine according to claim 1, **characterized in that** the inner diameter of the flange (25) is smaller than the inner diameter of the first tube section (21) between the first inlet (211) and the flange (25); and the inner diameter of the first tube section (21) between the first inlet (211) and the flange (25) further is smaller than the inner diameter of the first tube section (21) between the flange (25) and the first tail end (212).

4. The tyre repair machine according to claim 1, **characterized in that** the joint between the second tube section (22) and the pipe (30) is provided with a first fastening loop (31); the joint between the pipe (30) and the connector (40) is provided with a second fastening loop (32).

5. The tyre repair machine according to claim 1, **characterized in that** the bottle body (10) is further provided with an air orifice (11) for connecting to an air compressor and filling the bottle body (10) with compressed air.

6. The tyre repair machine according to claim 1, **characterized in that** a sealing gasket (23) for preventing the glue from flowing out is disposed between the glue guiding tube and the inner sidewalls of the bottle cap (20).

7. The tyre repair machine according to claim 6, **characterized in that** formed at the opening of the bottle body (10) is a neck tube (12), whose outer walls are provided with an external thread; the interior of the bottle cap (20) is formed with a receiving chamber (27); the sidewalls of the receiving chamber (27) are provided with an internal thread adapted to mate with the external thread; the neck tube (12) of the bottle body (10) is secured in the receiving chamber (27) via the external thread of the neck tube (12) and the internal thread of the receiving chamber (27);
the first tube section (21) is disposed in the receiving chamber (27); the sealing gasket (23) is disposed in the receiving chamber (27), and is located between the neck tube (12) and a top (271) of the bottle cap (20);
the first tail end (212) of the first tube section (21) extends to the top (271) of the bottle cap (20); the second tube section (22) is inserted into the top (271) of the bottle cap (20).

8. The tyre repair machine according to claim 1, **characterized in that** the connector (40) comprises a tyre mouthend core (41) connected to the pipe (30);
the connector (40) further comprises, sleeved on the outer wall of the tyre mouthend core (41), a sheath (42) for connecting to a tyre valve core; and a sealing ring (43) disposed on the tyre mouthend core (41) end for preventing leakage of air and glue.

9. The tyre repair machine according to claim 8, **characterized in that** the tyre mouthend core (41) is
connected to the pipe (30) via threads; the tyre mouthend core (41) outer wall is provided with an annular boss (411);
one end of the sheath (42) is snap-fit on the annular boss (411), with the other end provided with a thread (421) for connecting to the tyre valve core.

## Patentansprüche

1. Gerät zum Reparieren von Luftreifen, einen Flaschenkörper (10) umfassend, der Kleber bereithält, wobei eine an einer Öffnung des Flaschenkörpers (10) vorgesehene Flaschenkappe (20) den Flaschenkörper (10) abdichtet, wobei
eine Kleberführungsröhre in der Flaschenkappe (20) vorgesehen ist; die Kleberführungsröhre einen ersten Röhrenabschnitt (21), der sich in den Flaschenkörper (10) erstreckt, und einen zweiten Röhrenabschnitt (22) umfasst;
ein Ende des ersten Röhrenabschnitts (21) mit einem ersten Einlass (211) versehen ist, der ermöglicht, dass Kleber im Flaschenkörper (10) in den ersten Röhrenabschnitt (21) eintritt, und das andere Ende des ersten Röhrenabschnitts (21) ein geschlossenes erstes Endstück (212) bildet; ein Ende des zweiten Röhrenabschnitts (22) mit einem zweiten Einlass (221) versehen ist, der ermöglicht, dass der Kleber im ersten Röhrenabschnitt (21) in den zweiten Röhrenabschnitt (22) eintritt, und das andere Ende des zweiten Röhrenabschnitts (22) ein zweites Endstück (222) bildet; das zweite Endstück (222) des zweiten Röhrenabschnitts (22) mit einem Ende eines Rohrs (30) in Verbindung steht; das andere Ende des Rohrs (30) mit einem Steckverbinder (40) versehen ist, um eine Verbindung mit einem beschädigten Luftreifen einzugehen, um den Kleber im Inneren des Flaschenkörpers (10) in den beschädigten Luftreifen zu leiten;
sich der zweite Einlass (221) zwischen dem ersten Einlass (211) des ersten Röhrenabschnitts (21) und dem ersten Endstück (212) des ersten Röhrenabschnitts (21) befindet;
ein Flansch (25) an einer Innenwand des ersten Röhrenabschnitts (21) zwischen dem ersten Einlass (211) des ersten Röhrenabschnitts (21) und dem zweiten Einlass (221) des zweiten Röhrenabschnitts (22) vorgesehen ist, und ein Stopfen (24), der in der Lage ist, im ersten Röhrenabschnitt (21) zu gleiten, auch im ersten Röhrenabschnitt (21) vorgesehen ist,
**dadurch gekennzeichnet, dass**
mindestens eine Rippe (50) im ersten Röhrenabschnitt (21) festgemacht ist, wobei sich die Rippe zwischen dem Flansch (25) und dem ersten Endstück (212) befindet, wobei die Rippe (50) einen Rippenabschnitt (51), der am Stopfen (24) anstößt, und einen Stoßabschnitt (52) aufweist, der an den Rippenabschnitt (51) angeschlossen ist und an den Innenwänden des ersten Röhrenabschnitts (21) anstößt.

2. Gerät zum Reparieren von Luftreifen nach Anspruch 1, **dadurch gekennzeichnet, dass** die Flaschenkappe (20) mit einer Durchgangsöffnung (26) versehen ist, die sich durch die Flaschenkappe (20) und das erste Endstück (212) des ersten Röhrenabschnitts (21) erstreckt, um mit dem ersten Röhrenabschnitt (21) in Verbindung zu stehen; der Innendurchmesser der Durchgangsöffnung (26) kleiner ist als der Innendurchmesser des ersten Röhrenabschnitts (21) zwischen dem Flansch (25) und dem ersten Endstück (212).

3. Gerät zum Reparieren von Luftreifen nach Anspruch 1, **dadurch gekennzeichnet, dass** der Innendurchmesser des Flanschs (25) kleiner ist als der Innendurchmesser des ersten Röhrenabschnitts (21) zwischen dem ersten Einlass (211) und dem Flansch (25); und der Innendurchmesser des ersten Röhrenabschnitts (21) zwischen dem ersten Einlass (211) und dem Flansch (25) darüber hinaus kleiner ist als der Innendurchmesser des ersten Röhrenabschnitts (21) zwischen dem Flansch (25) und dem ersten Endstück (212).

4. Gerät zum Reparieren von Luftreifen nach Anspruch 1, **dadurch gekennzeichnet, dass** die Verbindungsstalle zwischen dem zweiten Röhrenabschnitt (22) und dem Rohr (30) mit einer ersten Befestigungsschlaufe (31) versehen ist; die Verbindungsstelle zwischen dem Rohr (30) und dem Steckverbinder (40) mit einer zweiten Befestigungsschlaufe (32) versehen ist.

5. Gerät zum Reparieren von Luftreifen nach Anspruch 1, **dadurch gekennzeichnet, dass** der Flaschenkörper (10) darüber hinaus mit einer Luftöffnung (11) versehen ist, um an einen Luftkompressor angeschlossen zu werden und den Flaschenkörper (10) mit Druckluft zu füllen.

6. Gerät zum Reparieren von Luftreifen nach Anspruch 1, **dadurch gekennzeichnet, dass** eine Dichtung (23), um zu verhindern, dass der Kleber ausläuft, zwischen der Kleberführungsröhre und den Innenseitenwänden der Flaschenkappe (20) angeordnet ist.

7. Gerät zum Reparieren von Luftreifen nach Anspruch 6, **dadurch gekennzeichnet, dass** an der Öffnung des Flaschenkörpers (10) ein Halsrohr (12) ausgebildet ist, dessen Außenwände mit einem Außengewinde versehen sind; das Innere der Flaschenkappe (20) mit einer Aufnahmekammer (27) ausgebildet ist; die Seitenwände der Aufnahmekammer (27) mit einem Innengewinde versehen sind, das dazu angepasst ist, sich mit dem Außengewinde zu verbinden; das Halsrohr (12) des Flaschenkörpers (10) über das Außengewinde des Halsrohrs (12) und das Innengewinde der Aufnahmekammer (27) in der Aufnahmekammer (27) gesichert ist;
der erste Röhrenabschnitt (21) in der Aufnahmekammer (27) angeordnet ist; die Dichtung (23) in der Aufnahmekammer (27) angeordnet ist und sich zwischen dem Halsrohr (12) und einem Oberteil (271) der Flaschenkappe (20) befindet;
das erste Endstück (212) des ersten Röhrenabschnitts (21) sich bis zum Oberteil (271) der Flaschenkappe (20) erstreckt; der zweite Röhrenabschnitt (22) in das Oberteil (271) der Flaschenkappe (20) eingeführt ist.

8. Gerät zum Reparieren von Luftreifen nach Anspruch 1, **dadurch gekennzeichnet, dass** der Steckverbinder (40) einen Luftreifenmundstückkern (41) umfasst, der an das Rohr (30) angeschlossen ist;
der Steckverbinder (40), auf die Außenwand des Luftreifenmundstückkerns (41) aufgeschoben, darüber hinaus eine Hülle (42) zum Anschluss an einen Luftreifenventilkern umfasst; und einen Dichtungsring (43), der am Ende des Luftreifenmundstückkerns (41) angeordnet ist, um ein Entweichen von Luft und Kleber zu verhindern.

9. Gerät zum Reparieren von Luftreifen nach Anspruch 8, **dadurch gekennzeichnet, dass** der Luftreifenmundstückkern (41) über Gewinde an das Rohr (30) angeschlossen ist; die Außenwand des Luftreifenmundstückkerns (41) mit einer ringförmigen Erhebung (411) versehen ist;
ein Ende der Hülle (42) auf die ringförmige Erhebung (411) aufgeschnappt ist, wobei das andere Ende mit einem Gewinde (421) zum Anschluss an den Luftreifenventilkern versehen ist.

## Revendications

1. Un dispositif de réparation de pneu, comprenant un corps de bouteille (10) contenant de la colle, sachant qu'un capuchon de bouteille (20) disposé au niveau d'une ouverture du corps de bouteille (10) scelle le corps de bouteille (10), sachant qu'un tube de guidage de colle est disposé dans le capuchon de bouteille (20) ; le tube de guidage de colle comprend une première section de tube (21) s'étendant dans le corps de bouteille (10), et une deuxième section de tube (22) ;
une extrémité de la première section de tube (21) est pourvue d'une première entrée (211) qui permet à la colle dans le corps de bouteille (10) d'entrer dans la première section de tube (21), et l'autre extrémité de la première section de tube (21) forme une première extrémité arrière fermée (212) ; une extrémité de la deuxième section de tube (22) est pourvue d'une deuxième entrée (221) qui permet à la colle dans la première section de tube (21) d'entrer dans la deuxième section de tube (22), et l'autre extrémité de la deuxième section de tube (22) forme une deuxième extrémité arrière (222) ; la deuxième extrémité arrière (222) de la deuxième section de tube (22) est en communication avec une extrémité d'un tuyau (30) ; l'autre extrémité du tuyau (30) est pourvue d'un connecteur (40) destiné à se connecter avec un pneu endommagé de manière à faire entrer la colle située à l'intérieur du corps de bouteille (10) dans le pneu endommagé ;
la deuxième entrée (221) est située entre la première entrée (211) de la première section de tube (21) et la première extrémité arrière (212) de la première section de tube (21);
une flasque (25) est disposée sur une paroi intérieure de la première section de tube (21) entre la première entrée (211) de la première section de tube (21) et la deuxième entrée (221) de la deuxième section de tube (22), et un bouchon (24) capable de coulisser dans la première section de tube (21) est également disposé dans la première section de tube (21),
**caractérisée en ce que**
au moins une nervure (50) est fixée dans la première section de tube (21), sachant que la nervure est située entre la flasque (25) et la première extrémité arrière (212), sachant que la nervure (50) inclut une partie de nervure (51) en butée sur le bouchon (24), et une partie en butée (52) connectée à ladite partie de nervure (51) et en butée contre les parois intérieures de la première section de tube (21).

2. Le dispositif de réparation de pneu selon la revendication 1, **caractérisée en ce que** le capuchon de bouteille (20) est pourvu d'un trou traversant (26) s'étendant à travers le capuchon de bouteille (20) et la première extrémité arrière (212) de la première section de tube (21) pour communiquer avec la première section de tube (21) ; le diamètre intérieur du trou traversant (26) est plus petit que le diamètre intérieur de la première section de tube (21) entre la flasque (25) et la première extrémité arrière (212).

3. Le dispositif de réparation de pneu selon la revendication 1, **caractérisée en ce que** le diamètre intérieur de la flasque (25) est plus petit que le diamètre intérieur de la première section de tube (21) entre la première entrée (211) et la flasque (25) ; et le diamètre intérieur de la première section de tube (21) entre la première entrée (211) et la flasque (25) est en outre plus petit que le diamètre intérieur de la première section de tube (21) entre la flasque (25) et la première extrémité arrière (212).

4. Le dispositif de réparation de pneu selon la revendication 1, **caractérisée en ce que** la jonction entre la deuxième section de tube (22) et le tuyau (30) est pourvue d'une première boucle de fixation (31) ; la jonction entre le tuyau (30) et le connecteur (40) est pourvue d'une deuxième boucle de fixation (32).

5. Le dispositif de réparation de pneu selon la revendication 1, **caractérisée en ce que** le corps de bouteille (10) est en outre pourvu d'un orifice d'air (11) destiné à se connecter à un compresseur d'air et à remplir le corps de bouteille (10) d'air comprimé.

6. Le dispositif de réparation de pneu selon la revendication 1, **caractérisée en ce qu'**une garniture d'étanchéité (23) destinée à empêcher que la colle s'écoule est disposée entre le tube de guidage de colle et les parois intérieures du capuchon de bouteille (20).

7. Le dispositif de réparation de pneu selon la revendication 6, **caractérisée en ce qu'**un tube à collet (12) dont les parois extérieures sont pourvues d'un filetage extérieur est formé au niveau de l'ouverture du corps de bouteille (10) ; l'intérieur du capuchon de bouteille (20) est formé avec une chambre de réception (27) ; les parois intérieures de la chambre de réception (27) sont pourvues d'un filetage intérieur apte à s'apparier avec le filetage extérieur ; le tube à collet (12) du corps de bouteille (10) est arrêté dans la chambre de réception (27) via le filetage extérieur du tube à collet (12) et le filetage intérieur de la chambre de réception (27) ;
la première section de tube (21) est disposée dans la chambre de réception (27) ; la garniture d'étanchéité (23) est disposée dans la chambre de réception (27), et est située entre le tube à collet (12) et un haut (271) du capuchon de bouteille (20) ;
la première extrémité arrière (212) de la première section de tube (21) s'étend jusqu'au haut (271) du capuchon de bouteille (20) ; la deuxième section de tube (22) est insérée dans le haut (271) du capuchon de bouteille (20).

8. Le dispositif de réparation de pneu selon la revendication 1, **caractérisée en ce que** le connecteur (40) comprend une âme d'embouchure de pneu (41) connectée au tuyau (30) ;
le connecteur (40) comprend en outre, emmanchée sur la paroi extérieure de l'âme d'embouchure de pneu (41), une gaine (42) destinée à se connecter à une âme de valve de pneu ; et une bague d'étanchéité (43) disposée sur l'extrémité de l'âme d'embouchure de pneu (41) pour empêcher une fuite d'air et de colle.

9. Le dispositif de réparation de pneu selon la revendication 8, **caractérisée en ce que** l'âme d'embouchure de pneu (41) est connectée au tuyau (30) via des filetages ; la paroi extérieure de l'âme d'embouchure de pneu (41) est pourvue d'un bossage annulaire (411) ;
une extrémité de la gaine (42) est ajustée par enclenchement sur le bossage annulaire (411), l'autre extrémité étant pourvue d'un filetage (421) pour se connecter à l'âme d'embouchure de pneu.
